# EUROPÄISCHE PATENTSCHRIFT

(11) **EP 0 806 134 B1**
(45) Veröffentlichungstag und Bekanntmachung des Hinweises auf die Patenterteilung: **04.07.2001**
(21) Anmeldenummer: 97103699.1
(22) Anmeldetag: 06.03.1997
(51) Int. Cl.: A01F 12/40

(54) **Mähdrescher mit Strohhäcksler**
Combine with a straw chopper
Moissonneuse-batteuse équipée d'un hache-paille

(30) Priorität: 09.05.1996 DE 19618686
(43) Veröffentlichungstag der Anmeldung: 12.11.1997
(73) Patentinhaber: CLAAS KGaA, 33428 Harsewinkel (DE)
(72) Erfinder: Roberg, Alfons, 33428 Harsewinkel (DE)

(56) Entgegenhaltungen:
- EP-A- 0 748 583
- DE-A- 4 321 905
- US-A- 2 502 032
- US-A- 2 858 867
- US-A- 3 165 133
- US-A- 3 256 026

## Beschreibung

Die Erfindung bezieht sich auf einen Mähdrescher nach dem Gattungsbegriff des Patentanspruchs 1. Solchermaßen ausgebildete Mähdrescher sind aus der von der Anmelderin ausgehenden DE-OS 43 21 905 bekannt. Der Erfindung liegt die Aufgabe zugrunde, die bei bekannten Anbauhäckslern mit gelenkig aufgehängten Schlegelmessern unangemessen hohe Antriebsleistung durch neuartige Ausbildung und Positionierung spürbar zu reduzieren. Die Lösung der Aufgabe wird in den durch den kennzeichnenden Teil des Patentanspruchs 1 dargestellten Maßgaben gesehen. Vorteilhafte Weiterbildungen der Erfindung sind durch den Wortlaut der Unteransprüche fixiert.

Anhand der Zeichnungen sei die Erfindung beispielhaft erläutert. Es zeigen:

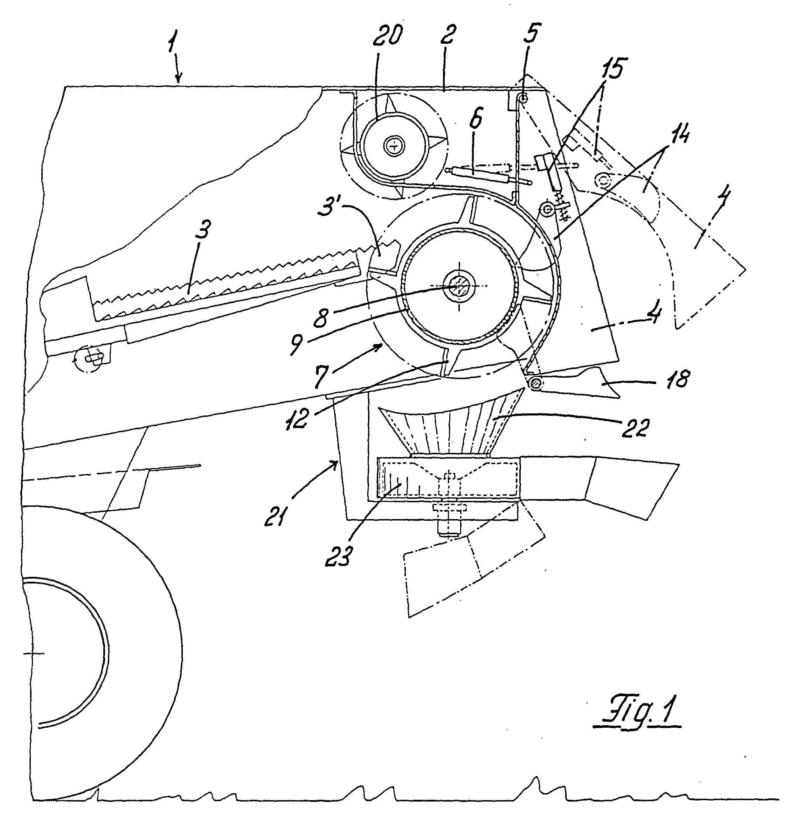

Figur 1 in schematischer Seitenansicht das abgabeseitige Ende eines Mähdreschers mit Anbauhäcksler nach der Erfindung;

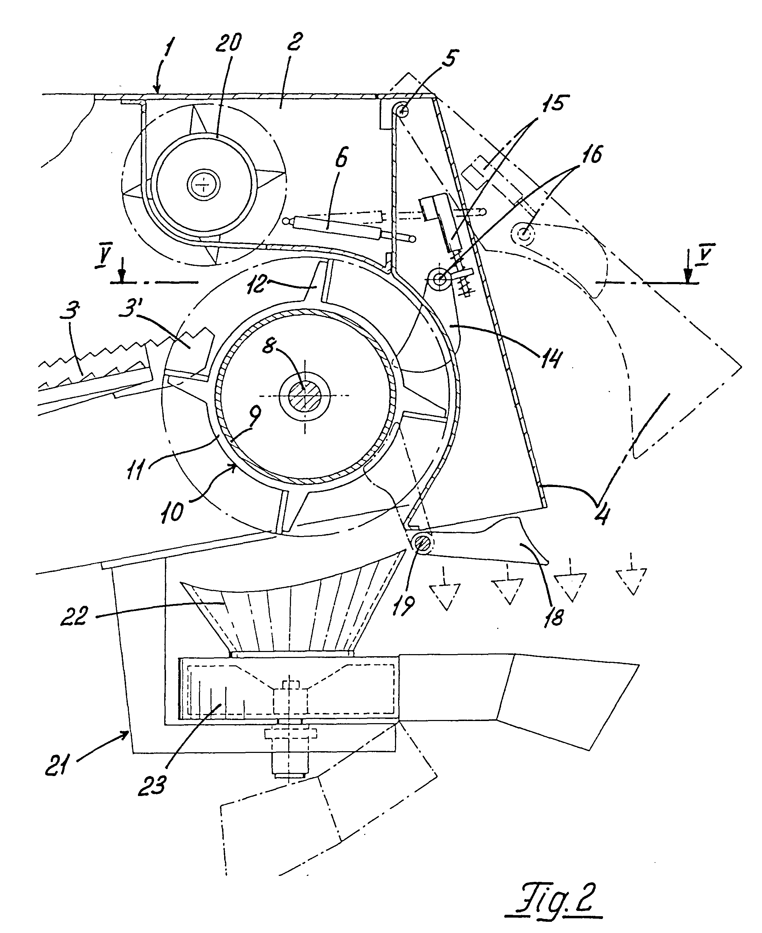

Figur 2 eine vergrößerte Teildarstellung nach Figur 1;

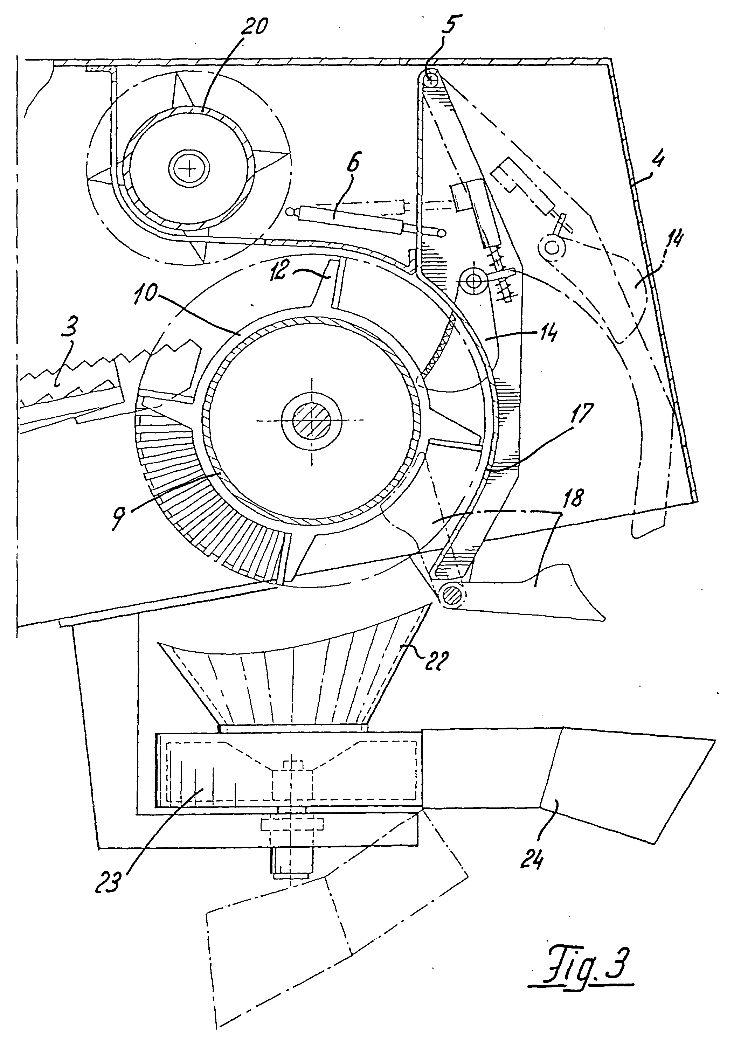

Figur 3 eine Seitenansicht einer abgewandelten Ausführungsform

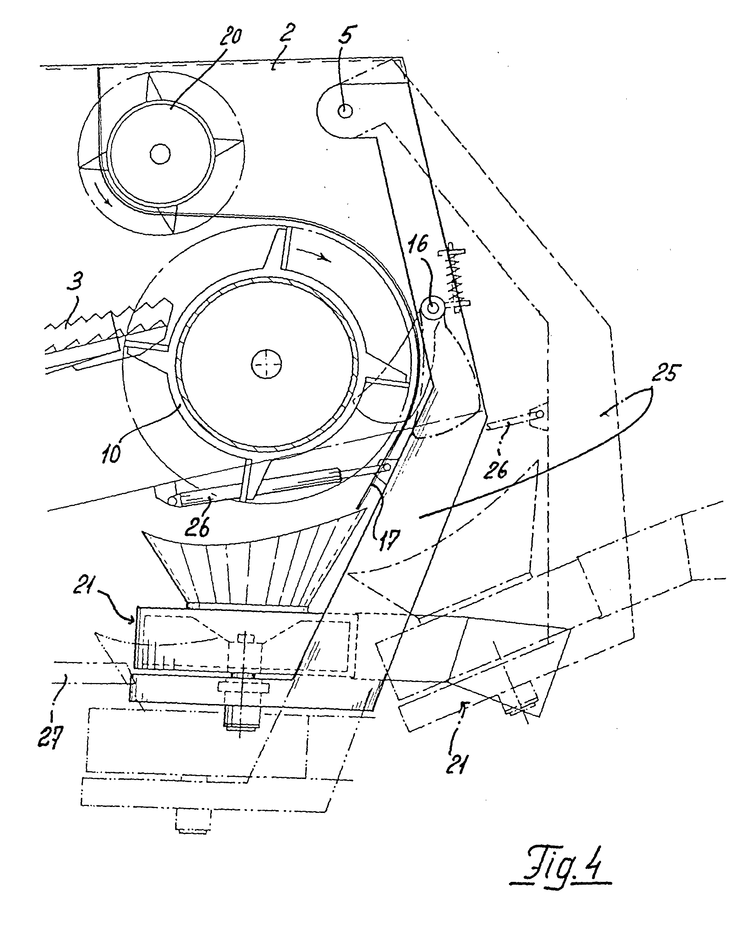

Figur 4 eine weitere Bauvariation in Seitenansicht und komplett verschwenkbarer Breitverteileinrichtung.

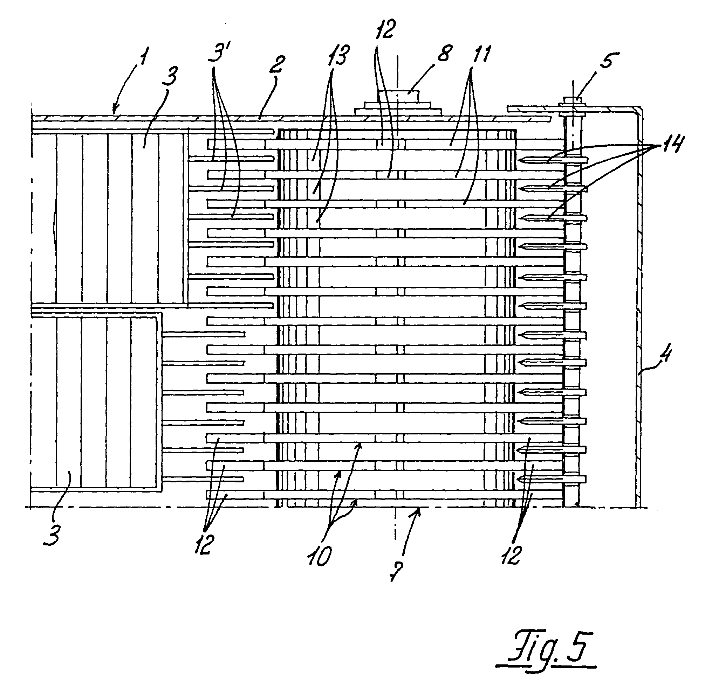

Figur 5 im Teilschnitt nach der Linie V/V in Figur 2 eine Draufsicht.

Mit 1 ist ein Mähdrescher bezeichnet, dessen Gehäuse das Bezugszeichen 2 trägt. Im Gehäuse sind Schüttler 3 angeordnet, die an ihrem abgabeseitigen Ende mit Übergabeleisten 3' versehen sind. Mit 4 ist die Abschlußhaube des Mähdreschers bezeichnet, die über Achsen 5 und ein Stellglied 6 ausschwenkbar am Gehäuse 2 befestigt ist. In Höhe des abgabeseitigen Endes der Schüttler 3 ist eine Häckseltrommel 7 angeordnet, deren Welle durch die Bezugsziffer 8 gekennzeichnet ist. Die Welle 8 ist im Gehäuse 2 drehbar gelagert und trägt einen zylindrischen Trommelmantel 9, auf dessen Außenfläche Tragringe 10 über die gesamte Innenbreite des Gehäuses 2 mit Abstand zueinander befestigt sind. Die Tragringe 10 bestehen aus einem, sich über 360° erstreckendem Sockelteil 11 an dem auf dem Umfang verteilt Schlag- bzw. Mitnehmerplatten 12 angeformt sind, die in ihrer Gesamtheit über die Breite der Trommel 7 auf dem Umfang derselben drehwinkelversetzt angeordnet sind. In den Ringspalt 13, zwischen benachbarten Tragringen 10 greifen einerseits die den Schüttlern 3 zugeordneten Übergabeleisten 3' und an anderer Stelle Gegenmesser 14 ein, wobei letztere in der Abschlußhaube 4, unter Einwirkung eines Druckspeichers 15 stehend, bei Fremdkörpereinfluß um die Achse 16 drehbar, ausweichbar gelagert sind. An ihrem oberen und rückwärtigen Umfang ist der Häckseltrommel 7 ein teilgeschlitztes Mantelblech 17 zugeordnet, durch welches die Gegenmesser 14 hindurchtreten können und das zumindest teilweise zusammen mit der Abschlußhaube 4 um die Achse 5 wegschwenkbar ist, wenn die Häckseltrommel außer Wirkung gebracht und das Stroh ungehäckselt im Schwad abgelegt werden soll. Dazu sind

### Bezugszeichenliste

- 1 -: Mähdrescher
- 2 -: MD-Gehäuse
- 3 -: Schüttler
- 3' -: Übergabeleisten
- 4 -: Abschlußhaube
- 5 -: Schwenkachsen
- 6 -: Stellglied
- 7 -: Häckseltrommel
- 8 -: Welle der Häckseltrommel
- 9 -: Trommelmantel
- 10 -: Tragringe
- 11 -: Sockelteil
- 12 -: Schlagplatten
- 11' -: Druckspeicher
- 11" -: Achse der Gegenmesser
- 13 -: Ringspalt
- 14 -: Gegenmesser
- 15 -: Druckspeicher
- 16 -: Achse der Gegenmesser
- 17 -: Mantelblech
- 18 -: Abstreifleisten
- 19 -: Achsen der Abstreifleisten
- 20 -: Zinkentrommel
- 21 -: Breitverteileinrichtung
- 22 -: Übergabetrichter
- 23 -: Wurfgebläse
- 24 -: Auswurfstutzen
- 25 -: Tragarme
- 26 -: Stellglied
- 27 -: Siebkastenverlängerung

## Patentansprüche

1. Mähdrescher mit Strohschüttlern und einer den Schüttlern nachgeordneten Häckseltrommel mit zugehörigen Gegenmessern zur Zerkleinerung des ausgedroschenen Strohs, wobei unterhalb der Häckseltrommel eine Breitverteileinrichtung für das zerkleinerte Stroh angeordnet ist,
**dadurch gekennzeichnet,**
daß die Häckseltrommel (7) in Höhe des Abgabeendes der Strohschüttler (3) angeordnet ist und aus parallel mit Abstand zueinander auf einem über eine Welle (8) im Mähdreschergehäuse (2) gelagertem Trommelmantel (9) positionierten Tragringen (10) und zugehörigen an die Stelle bisher bekannter Schlegelmesser tretenden Schlagplatten (12) besteht, wobei an den Schüttlerenden vorgesehene Übergabeleisten (3') ebenso in den Ringspalt (13) zwischen den Tragringen (10) eingreifen wie die im Bereich der Mähdrescherabschlußhaube (4) bei Überlast ausweichbar angeordnetem Gegenmesser (14).

2. Mähdrescher nach Anspruch 1,
**dadurch gekennzeichnet,**
daß die Abschlußhaube (4) mit den Gegenmessern (14) über Achsen (5) ausschwenkbar am Mähdreschergehäuse (2) gelagert ist.

3. Mähdrescher nach den Ansprüchen 1 und 2,
**dadurch gekennzeichnet,**
außerdem Abstreifleisten 18, über zugehörige Achsen 19 in die Ringspalte 13 zwischen den Tragringen 10 einklappbar, im Dreschergehäuse 2 ortsfest gelagert. (Strichpunktierte Darstellung in den Figuren 1 und 2). Eine oberhalb der Häckseltrommel 7 angeordnete Zinkentrommel 20 soll die Übergabe des von den Schüttlern 3 kommenden Strohs in den Bereich des Häckselaggregates erleichtern. Unterhalb der Häckseltrommel 7 ist eine Breitverteileinrichtung 21 für das Häckselgut angeordnet, die aus Übergabetrichter 22; Wurfgebläse 23 und Auswurfstutzen 24 besteht.
Figur 4 zeigt eine Bauvariante dergestalt, daß zu beiden Seiten der Abschlußhaube 4 L-ähnliche Tragarme 25 angeordnet sind, die an ihren unteren Enden die Breitverteileinrichtung 21 ausschwenkbar um die Achse 5 tragen. Das für den Durchtritt der Gegenmesser 14 teilgeschlitzte ggf. zweigeteilte Mantelblech 17 nimmt bei dieser Bauform an der möglichen Schwenkbewegung der L-förmigen Tragarme 25 nicht teil und dient als ortsfestes Element als Leiteinrichtung für das als Schwad abgelegte, ungehäckselte Stroh. Die Zuordnung von Abstreifleisten 18 ist auch bei dieser Bauform sinnvoll. Die Schwenkbewegung für die Tragarme 25 ist auslösbar durch ein entsprechend stabil ausgebildetes Stellglied 26, das einendig am unteren Gehäuse 2 befestigt ist. Über eine Siebkastenverlängerung 27 kann die Spreu in die Breitverteileinrichtung 21 eingebracht werden. daß der obere und rückwärtige Umfang der Häckseltrommel (7) von einem Häckselgut leitenden, teilgeschlitzten Mantelblech (17) umgeben ist, durch das die Gegenmesser (14) hindurchtreten können.

4. Mähdrescher nach den Ansprüchen 1 bis 3,
**dadurch gekennzeichnet,**
daß zumindest Teile des Mantelblechs (17) zusammen mit den Gegenmessern (14) und der Abschlußhaube (4) um die Achse (5), für den Fall gewünschter Schwadablage ungehäckselten Strohs, ausschwenkbar sind.

5. Mähdrescher nach den Ansprüchen 1 bis 4,
**dadurch gekennzeichnet,**
daß das Mantelblech (17) Bestandteil der Abschlußhaube (4) ist und damit zusammen mit letzterer um die Achse (5) verschwenkbar ist.

6. Mähdrescher nach den Ansprüchen 1 bis 4,
**dadurch gekennzeichnet,**
daß das Mantelblech (17) für sich um eigene Achsen in der Abschlußhaube (4) schwenkbar gelagert ist.

7. Mähdrescher nach den Ansprüchen 1 bis 6,
**dadurch gekennzeichnet,**
daß oberhalb der Häckseltrommel (7) eine zinkenbesetzte Strohleittrommel (20) angeordnet ist.

8. Mähdrescher nach den Ansprüchen 1 bis 7,
**dadurch gekennzeichnet,**
daß am unteren Ende des Mähdreschergehäuses (2), im unteren Umfangsbereich der Häckseltrommel (7) um eine Achse (19) klappbare, in die Zwischenräume der Tragringe (10) einschwenkbare Abstreifleisten (18) vorgesehen sind.

9. Mähdrescher nach den Ansprüchen 1 bis 8,
**dadurch gekennzeichnet,**
daß zu beiden Seiten der Abschlußhaube (4) um die Achse (5) ausschwenkbare im Querschnitt L-ähnliche Tragarme (25) angeordnet sind, an deren unteren freien Schenkeln die Breitverteileinrichtung (21) für das zerkleinerte Stroh befestigt ist, wobei die Verteileinrichtung in bekannter Weise aus Übergabetrichter (22); Wurfgebläse (23) und Auswurfstutzen (24) besteht.

## Claims

1. A combine harvester having straw walkers and a chopping drum which is arranged downstream of the walkers, with associated co-operating blades for cutting up the threshed straw, wherein a widthwise distributor device for the cut-up straw is arranged beneath the chopping drum, characterised in that the chopping drum (7) is arranged at the height of the discharge end of the straw walkers (3) and comprises carrier rings (10) positioned in mutually spaced parallel relationship on a drum casing (9) supported by way of a shaft (8) in the combine harvester housing (2) and associated beater plates (12) in place of previously known flail blades, wherein transfer bars (3') provided at the walker ends engage into the annular gap (13) between the carrier rings (10), like also the co-operating blades (14) which are arranged in the region of the closure cover (4) of the combine harvester deflectably in the event of an overload.

2. A combine harvester according to claim 1 characterised in that the closure cover (4) with the co-operating blades (14) is mounted by way of axes (5) to the housing (2) of the combine harvester in such a way that it can be pivoted outwardly.

3. A combine harvester according to claims 1 and 2 characterised in that the upper and rearward periphery of the chopping drum (7) is surrounded by a partially slotted peripheral casing plate (17) which guides chopped material and through which the co-operating blades (14) can pass.

4. A combine harvester according to claims 1 to 3 characterised in that at least parts of the peripheral casing plate (17) can be pivoted outwardly together with the co-operating blades (14) and the closure cover (4) about the axis (5), for the case of wanting to deposit a swathe of unchopped straw.

5. A combine harvester according to claims 1 to 4 characterised in that the peripheral casing plate (17) is a component of the closure cover (4) and is therefore pivotable together with same about the axis (5).

6. A combine harvester according to claims 1 to 4 characterised in that the peripheral casing plate (7) in itself is mounted pivotably about its own axes in the closure cover (4).

7. A combine harvester according to claims 1 to 6 characterised in that arranged above the chopping drum (7) is a tine-bearing straw guide drum (20).

8. A combine harvester according to claims 1 to 7 characterised in that provided at the lower end of the housing (2) of the combine harvester are stripper bars (18) which are pivotable about an axis (19) in the lower peripheral region of the chopping drum (7) and which can be pivoted into the intermediate spaces between the carrier rings (10).

9. A combine harvester according to claims 1 to 8 characterised in that arranged at both sides of the closure cover (4) are carrier arms (25) which are of an L-like cross-section and which can be pivoted outwardly about the axis (5) and to the lower free limbs of which is fixed the widthwise distributor device (21) for the cut-up straw, wherein the distributor device in known manner comprises a transfer hopper (22), a projection blower (23) and a discharge duct (24).

## Revendications

1. Moissonneuse-batteuse comportant des secoueurs de paille et disposé à la suite de ceux-ci, un tambour broyeur associé à des contre-couteaux aux fins de broyer la paille battue, un dispositif éparpilleur pour la paille broyée étant placé au-dessous du tambour broyeur, caractérisée en ce que le tambour broyeur (7) est disposé au niveau de l'extrémité de sortie des secoueurs (3) et est formé d'anneaux-supports (10) qui sont disposés parallèlement les uns aux autres, à distance les uns des autres, sur la paroi latérale (9) d'un tambour supporté par un arbre (8) dans la carrosserie (2) de moissonneuse-batteuse, et de plaques-battoirs (12) associées, qui sont montées à la place des couteaux articulés connus jusqu'à présent, des lamelles de jonction (3') disposées à l'extrémité des secoueurs s'étendant jusque dans l'espace annulaire (13) entre les anneaux-supports (10), d'une manière similaire aux contre-couteaux (14) montés dans la région du capot de moissonneuse-batteuse (4) de manière à pivoter en cas de surcharge .

2. Moissonneuse-batteuse selon la revendication 1, caractérisée en ce que le capot (4) avec les contre-couteaux (14) est monté pivotant sur la carrosserie de moissonneuse-batteuse (2) au moyen d'axes (5).

3. Moissonneuse-batteuse selon les revendications 1 et 2, caractérisée en ce que la partie supérieure arrière de la surface latérale du tambour broyeur (7) est entourée d'une tôle latérale (17) partiellement fendue qui assure le guidage du produit de broyage et à travers laquelle peuvent s'étendre les contre-couteaux (14).

4. Moissonneuse-batteuse selon les revendications 1 à 3, caractérisée en ce que des parties au moins de la tôle latérale (17) peuvent pivoter autour de l'axe (5), en même temps que les contre-couteaux (14) et le capot de fermeture (4) pour le cas où l'on souhaite déposer la paille non broyée en andains.

5. Moissonneuse-batteuse selon les revendications 1 à 4, caractérisée en ce que la tôle latérale (17) fait partie du capot de fermeture (4) et par conséquent pivote avec ce dernier autour de l'axe (5).

6. Moissonneuse-batteuse selon les revendications 1 à 4, caractérisée en ce que la tôle latérale (17), elle-même, est montée pivotante autour d'axes propres dans le capot de fermeture (4).

7. Moissonneuse-batteuse selon les revendications 1 à 6, caractérisée en ce qu'un tambour guide-paille (20) pourvu de dents est disposé au-dessus du tambour broyeur (7).

8. Moissonneuse-batteuse selon les revendications 1 à 7, caractérisée en ce qu'il est prévu à l'extrémité inférieure de la carrosserie de moissonneuse-batteuse (2), dans la région inférieure de la surface latérale du tambour broyeur (7), des lames décolleuses (18) qui pivotent autour d'un axe (19) et peuvent être engagées dans les espaces annulaires entre les anneaux de support (10).

9. Moissonneuse-batteuse selon les revendications 1 à 8, caractérisée en ce que de chaque côté du capot de fermeture (4) sont disposés des bras-supports (25) à section transversale en forme de L, sur les ailes inférieures libres desquels le dispositif éparpilleur (21) pour la paille broyée est fixé, le dispositif éparpilleur étant formé de manière connue d'une trémie réceptrice (11), d'une soufflerie de dispersion (23) et de conduits d'éjection (24).
